# EUROPÄISCHE PATENTSCHRIFT

(11) **EP 3 684 653 B1**
(45) Veröffentlichungstag und Bekanntmachung des Hinweises auf die Patenterteilung: **20.07.2022**
(21) Anmeldenummer: 19728315.3
(22) Anmeldetag: 17.05.2019
(51) Int. Cl.: B60R 21/215

(54) **ABDECKUNG EINES AIRBAGS**
COVERING OF AN AIRBAG
RECOUVREMENT D'UN SAC GONFLABLE

(30) Priorität: 24.08.2018 DE 102018006702
(43) Veröffentlichungstag der Anmeldung: 29.07.2020
(73) Patentinhaber: K.L. Kaschier- und Laminier GmbH, 48455 Bad Bentheim-Gildehaus (DE)
(72) Erfinder: SCHULZE WEHNINCK, Rembert, 82327 Tutzing (DE); RORING, Albert, 48599 Gronau-Epe (DE)
(74) Vertreter: Cohausz Hannig Borkowski Wißgott
(86) Internationale Anmeldenummer: PCT/EP2019/000152
(87) Internationale Veröffentlichungsnummer: WO 2020/038595

(56) Entgegenhaltungen:
- EP-A1- 2 727 775
- WO-A1-2005/090132
- DE-A1-102010 012 136
- DE-A1-102012 109 350
- DE-A1-102013 213 791
- US-A- 6 089 642
- US-A1- 2005 140 121

## Beschreibung

Die Erfindung betrifft eine Abdeckung über dem Schusskanal eines Airbags zum Verschluss einer Airbagdurchtrittsöffnung mit mindestens einer Airbagklappe, wobei die Abdeckung am Rand der Airbagklappe(n) mindestens eine Sollbruchlinie aufweist, um das Entfalten des Airbagkissens zu ermöglichen, und wobei die Airbagklappe(n) über eine Gelenkstelle mit einer Klappenstützwand angeformt verbunden ist/sind, die auf der Innenseite der Schusskanalwand insbesondere befestigt anliegt.

Eine solche Abdeckung ist aus der EP 2 727 775 A1 bekannt. Bei diesen Abdeckungen hat es sich gezeigt, dass der das Prallkissen aufnehmende Schusskanal nicht immer genügend widerstandsfähig ist. Dies besonders an den Stellen, an denen im Kunststoffspritzguss die Kunststofffronten aufeinandertreffen.

Abdeckungen für den Schusskanal eines Airbags sind auch aus der WO 2005/090132 A1 und der DE 10 2012 109 350 A1 bekannt. Auch hier haben die vier Ecken des Schusskanals keine ausreichende Stabilität, so dass sich Teile beim Auslösen des Airbags lösen können.

Aufgabe der Erfindung ist es, eine Abdeckung der eingangs genannten Art so zu verbessern, dass der Schusskanal verstärkt ist ohne Gewichtserhöhung.

Diese Aufgabe wird erfindungsgemäß dadurch gelöst, dass die Klappenstützwand entlang der Schusskanalwand innenseitig soweit umläuft, dass zumindest die der Airbagklappe(n) nahen vier Eckbereiche des Schusskanals bedeckt sind.

Hierdurch bildet die Klappenstützwand eine Verstärkung des der Airbagklappe(n) nahen Bereichs des Schusskanals. Die Schusskanalwand und der Gelenkbereich der Airbagklappe(n) sind verstärkt, wobei auch die Stellen gesichert sind, an denen im Spritzguss die Kunststofffronten aufeinandertreffen.

Vorzugsweise wird vorgeschlagen, dass die Klappenstützwand einen umlaufenden Rahmen bildet, an dessen Rahmenlängsseite(n) die Airbagklappe(n) über die Gelenkstelle verbunden ist/sind. Auch kann im Bereich der Gelenkstelle die Airbagklappe(n) und/oder die Klappenstützwand ein Materialreservoir in Form einer Faltung aufweisen, durch die die Airbagklappe(n) in ihrer Länge nach außen hin streckbar ist/sind. Ferner wird die Verstärkung dadurch erhöht, dass die Klappenstützwand an der Innenseite der Schusskanalwand befestigt ist.

Eine große Austrittsöffnung für das Prallkissen ist gesichert, wenn die Flächengröße einer Airbagklappe oder zweier Airbagklappen der Fläche der Öffnung des Schusskanals entspricht.

Eine besonders hohe Widerstandskraft wird erzielt, wenn die Airbagklappe(n) und die Klappenstützwand aus einem Verbundwerkstoff bestehen mit mindestens einer Lage aus Kunststoffbändern oder-fasern insbesondere aus thermoplastischem Polypropylen oder Polyester und mindestens einer darauf geschmolzenen Kunststofflage. Dabei können die Kunststoffbänder oder -fasern ein Gewebe bilden.

Die Montage der Abdeckung wird erleichtert, wenn der untere Rand mindestens einer Rahmenlängsseite der Klappenstützwand Befestigungszungen aufweist. Ferner ist in der Regel die Abdeckung mit einer Außenabdeckung aus einem Kunststoffschaummaterial und einer Außenhaut bedeckt.

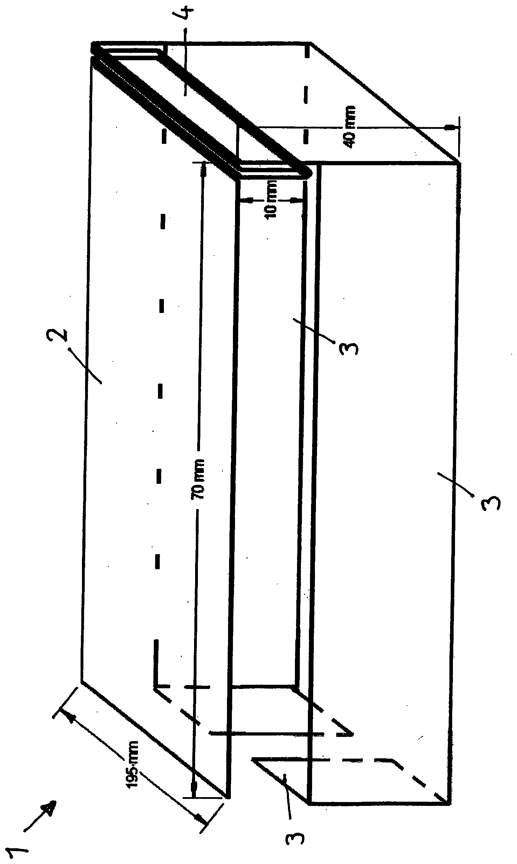

Ein Ausführungsbeispiel der erfindungsgemäßen Abdeckung ist in der Zeichnung perspektivisch dargestellt und wird im Folgenden näher beschrieben.

Der Ort, an dem die erfindungsgemäße Abdeckung 1 verwendet wird, ist eine Airbaganordnung eines Kraftfahrzeugs, mit einer Kfz.-Innenraumverkleidung oder Instrumententafel, die eine Durchtrittsöffnung für das Prallkissen eines Airbags aufweist. Die Airbaganordnung weist einen das Airbagkissen (Prallkissen) aufnehmenden Schusskanal auf, dessen obere Öffnung durch die Abdeckung 1 verschlossen ist, die eine oder zwei Airbagklappen 2 aufweist, die die obere Öffnung des Schusskanals überspannen. Bei Anordnung nur einer Airbagklappe 2 entsprechen die Außenabmessungen der Airbagklappe den Flächenabmessungen der oberen Öffnung des Schusskanals. Bei Anordnung von zwei Airbagklappen entsprechen die Außenabmessungen einer Airbagklappe der halben Fläche der oberen Öffnung des Schusskanals.

Die eine oder zwei Airbagklappe(n) 2 ist/sind mit ihrer Längsseite über eine Gelenkstelle 4 an einer Klappenstützwand 3 gelenkig befestigt, die die Prallkissen-Durchtrittsöffnung des Schusskanals umgibt. Hierbei umgibt die Klappenstützwand 3 die Durchtrittsöffnung rundum als geschlossener Rahmen oder die Klappenstützwand 3 verläuft entlang der Schusskanalwand innenseitig soweit, dass zumindest die der Airbagklappe(n) 2 nahen vier Eckbereiche des Schusskanals bedeckt sind. Im letzten Fall bildet eine Längsseite der Klappenstützwand 3 eine Lücke.

Die Gelenkstelle 4 zwischen Klappenstützwand 3 und Airbagklappe(n) 2 ist an der/den Airbagklappe(n) und der Klappenstützwand 3 angeformt, so dass Airbagklappe(n), Gelenkstelle und Klappenstützwand 3 von einem einzigen Kunststoffteil gebildet sind, das im Kunststoffspritzverfahren hergestellt ist. Hierbei bildet die Gelenkstelle 4 eine Faltung (wie dies beispielsweise die EP 2 727 775 A1 zeigt) als Materialreservoir, so dass die Klappe(n) sich nach außen begrenzt bewegen können.

Die Klappenstützwand 3 liegt an der Innenseite der Schusskanalwand an und ist vorzugsweise an dieser befestigt.

Die Airbagklappe(n) 2, die Klappenstützwand 3 und die Gelenkstelle 4 bestehen aus einem Verbundstoff mit mindestens einer Lage aus Kunststoffbändern und/oder -fasern insbesondere aus thermoplastischem Polypropylen oder Polyester und mindestens einer darauf geschmolzenen Kunststofflage. Hierbei können die Kunststoffbänder oder -fasern ein Gewebe bilden.

Der untere Rand der Klappenstützwand 3 bildet zur Befestigung in regelmäßigen Abständen angeordnete Zungen und die Abdeckung 1 ist mit einer Außenabdeckung aus einem Kunststoffschaummaterial und einer Außenhaut bedeckt.

## Patentansprüche

1. Abdeckung über dem Schusskanal eines Airbags zum Verschluss einer Airbagdurchtrittsöffnung mit mindestens einer Airbagklappe (2), wobei die Abdeckung (1) am Rand der Airbagklappe(n) (2) mindestens eine Sollbruchlinie aufweist, um das Entfalten des Airbagkissens zu ermöglichen, und wobei die Airbagklappe(n) (2) über eine Gelenkstelle (4) mit einer Klappenstützwand (3) angeformt verbunden ist/sind, die auf der Innenseite der Schusskanalwand insbesondere befestigt anliegt, **dadurch gekennzeichnet, dass** die Klappenstützwand (3) entlang der Schusskanalwand innenseitig soweit umläuft, dass zumindest die der Airbagklappe(n) (2) nahen vier Eckbereiche des Schusskanals bedeckt sind.

2. Abdeckung (1) nach Anspruch 1, **dadurch gekennzeichnet, dass** die Klappenstützwand (3) einen umlaufenden Rahmen bildet, an dessen Rahmenlängsseite(n) die Airbagklappe(n) (2) über die Gelenkstelle (4) verbunden ist/sind.

3. Abdeckung (1) nach Anspruch 1 oder 2, **dadurch gekennzeichnet, dass** im Bereich der Gelenkstelle (4) die Airbagklappe(n) (2) und/oder die Klappenstützwand (3) ein Materialreservoir in Form einer Faltung aufweist/aufweisen, durch die die Airbagklappe(n) (2) in ihrer Länge nach außen hin streckbar ist/sind.

4. Abdeckung (1) nach einem der vorherigen Ansprüche, **dadurch gekennzeichnet, dass** die Klappenstützwand (3) an der Innenseite der Schusskanalwand befestigt ist.

5. Abdeckung (1) nach einem der vorherigen Ansprüche, **dadurch gekennzeichnet, dass** die Flächengröße einer Airbagklappe (2) oder zweier Airbagklappen der Fläche der Öffnung des Schusskanals entspricht.

6. Abdeckung (1) nach einem der vorherigen Ansprüche, **dadurch gekennzeichnet, dass** die Airbagklappe(n) (2) und die Klappenstützwand (3) aus einem Verbundwerkstoff bestehen mit mindestens einer Lage aus Kunststoffbändern oder -fasern insbesondere aus thermoplastischem Polypropylen oder Polyester und mindestens einer darauf geschmolzenen Kunststofflage.

7. Abdeckung (1) nach Anspruch 6, **dadurch gekennzeichnet, dass** die Kunststoffbänder oder -fasern ein Gewebe bilden.

8. Abdeckung (1) nach einem der vorherigen Ansprüche, **dadurch gekennzeichnet, dass** der untere Rand mindestens einer Rahmenlängsseite der Klappenstützwand (3) Befestigungszungen aufweist.

9. Abdeckung (1) nach einem der vorherigen Ansprüche, **dadurch gekennzeichnet, dass** sie mit einer Außenabdeckung aus einem Kunststoffschaummaterial und einer Außenhaut bedeckt ist.

## Claims

1. Covering over the chute channel of an airbag for closing an airbag through-opening with at least one airbag flap (2), in which the covering (1) has at least one target break line at the edge of the airbag flap(s) (2) to enable the unfolding of the airbag cushion, and in which the airbag flap(s) (2) is/are moulded via a joining point (4) to a flap support wall (3), which is in contact with the inner side of the chute channel and in particular secured to it, **characterised by** the flap support wall (3) running around the inside of the chute channel wall so that at least the four corner regions of the chute channel near the airbag flap(s) (2) are covered.

2. Covering (1) according to claim 1, **characterised by** the flap support wall (3) forming a circumferential frame, with the airbag flap(s) (2) connected to the long side(s) of the frame via the joining point (4).

3. Covering (1) according to claim 1 or 2, **characterised by** the airbag flap(s) (2) and/or the flap support wall (3) in the area of the joining point (4) having a material reservoir in the form of a fold, through which the airbag flap(s) (2) can be stretched lengthwise to the outside.

4. Covering (1) according to one of the preceding claims, **characterised by** the flap support wall (3) being attached to the inside of the chute channel wall.

5. Covering (1) according to one of the preceding claims, **characterised by** the area of an airbag flap (2) or two airbag flaps corresponding to the area of the chute channel opening.

6. Covering (1) according to one of the preceding claims, **characterised by** the airbag flap(s) (2) and the flap support wall (3) consisting of a composite material with at least one layer of plastic bands or fibres, notably thermoplastic polypropylene or polyester, and at least one layer of synthetic material molten onto that.

7. Covering (1) according to claim 6, **characterised by** the plastic bands or fibres forming a web.

8. Covering (1) according to one of the preceding claims, **characterised by** the lower edge of at least one long side of the frame of the flap support wall (3) having attachment flaps.

9. Covering (1) according to one of the preceding claims, **characterised by** being covered by an exterior covering made of a synthetic foam material and an outer layer.

## Revendications

1. Couvercle au-dessus du canal d'éjection d'un airbag pour fermer une ouverture de passage d'airbag avec au moins un volet d'airbag (2), sachant que le couvercle (1) présente au bord du ou des volets d'airbag (2) au moins une ligne de rupture pour permettre le déploiement du coussin d'airbag, et le ou les volets d'airbag (2) sont reliés par une articulation (4) à une paroi de support de volet (3) s'appliquant sur la face intérieure de la paroi du canal d'éjection, en particulier en étant fixée, **caractérisé en ce que** la paroi de support de volet (3) s'étend le long de la paroi du canal d'éjection, côté intérieur, jusqu'à ce qu'au moins les quatre zones de coin du canal d'éjection proches du ou des volets d'airbag (2) soient recouvertes.

2. Couvercle (1) selon la revendication 1, **caractérisé en ce que** la paroi de support de volet (3) forme un cadre périphérique dont le ou les côtés longitudinaux sont reliés par l'articulation (4) au ou aux volets d'airbag (2).

3. Couvercle (1) selon la revendication 1 ou 2, **caractérisé en ce que,** dans la zone de l'articulation (4), le ou les volets d'airbag (2) et/ou la paroi de support de volet (3) présentent un réservoir de matière sous forme de pliage au moyen duquel le ou les volets d'airbag (2) peuvent être étirés dans leur longueur vers l'extérieur.

4. Couvercle (1) selon l'une des revendications précédentes, **caractérisé en ce que** la paroi de support de volet (3) est fixée sur la face intérieure de la paroi du canal d'éjection.

5. Couvercle (1) l'une des revendications précédentes, **caractérisé en ce que** la surface d'un ou deux volets d'airbag (2) correspond à la surface de l'ouverture du canal d'éjection.

6. Couvercle (1) selon l'une des revendications précédentes, **caractérisé en ce que** le ou les volets d'airbag (2) et la paroi de support de volet (3) sont constitués d'un matériau composite comportant au moins une couche de rubans ou de fibres en matière plastique, en particulier de polypropylène ou de polyester thermoplastique, et d'au moins une couche de matière plastique fondue par-dessus.

7. Couvercle (1) selon la revendication 6, **caractérisé en ce que** les rubans ou fibres en matière plastique forment un tissu.

8. Couvercle (1) selon l'une des revendications précédentes, **caractérisé en ce que** le bord inférieur d'au moins un côté longitudinal du cadre de la paroi de support de volet (3) présente des languettes de fixation.

9. Couvercle (1) selon l'une des revendications précédentes, **caractérisé en ce qu'il** est recouvert d'un revêtement extérieur en matériau plastique expansé et d'une peau extérieure.
